# EUROPÄISCHE PATENTANMELDUNG

(11) **EP 0 587 227 A2**
(43) Veröffentlichungstag der Anmeldung: **16.03.1994**
(21) Anmeldenummer: 93202538.0
(22) Anmeldetag: 31.08.1993
(51) Int. Cl.: G11B 15/10, G11B 15/675, G11B 15/44

(54) **Magnetbandkassettengerät mit einem die Wickelteller antreibenden Motor (Lademechanismus mit langem Verschiebeweg)**

(30) Priorität: 05.09.1992 DE 4229753
(71) Anmelder: Philips Patentverwaltung GmbH, 22335 Hamburg (DE); Philips Electronics N.V., 5621 BA Eindhoven (NL)
(72) Erfinder: Scholz, Thomas, D-20097 Hamburg (DE); Koch, Stefan, D-20097 Hamburg (DE)
(74) Vertreter: von Laue, Hanns-Ulrich, Dipl.-Ing.

(57) **Zusammenfassung**

Die Erfindung bezieht sich auf ein Magnetbandkassettengerät mit einem die Wickelteller über ein Wickelgetriebe (5) antreibenden Motor, der auch eine längsverschiebliche, einen Kopfträger (26) verstellende Servostange (9), ein Schaltorgan (18) und einen Lademechanismus (21) antreibt, der aus einem Liftschieber (22) und einem mit diesem gekuppelten Kassettenschacht (23) besteht, die zwischen einer Ejectstellung und einer Spielstellung verstellbar sind, in der der Kassettenschacht (23) in eine Spiellage absenkbar ist, wobei ein Ladegetriebe (10) vorgesehen ist, mit dem der Lademechanismus (21) zu- und abschaltbar ist und das von Teilen (6) des Wickelgetriebes (5) antreibbar ist, wobei die Zu- und Abschaltung mittels einer von der Servostange (9) getragenen Steuerstange (14) erfolgt, wobei das Ladegetriebe (10) und die es antreibenden Teile (6) des Wickelgetriebes (5) auf der Chassisseite, auf der der Lademechanismus angeordnet ist, mit dem Liftschieber (22) antriebsmäßig verbunden sind und wobei das Ladegetriebe (10) an einem schwenkbaren Drehhebel (12) angeordnet ist, der von der Steuerstange (14) zwischen einer Antriebs- und einer Außereingriffsstelle verstellbar ist.

## Beschreibung

Die Erfindung bezieht sich auf ein Magnetbandkassettengerät mit einem die Wickelteller über ein Wickelgetriebe antreibenden Motor, der auch eine längsverschiebliche, einen Kopfträger verstellende Servostange, ein Schaltorgan und einen Lademechanismus antreibt, der aus einem Liftschieber und einem mit diesem gekuppelten Kassettenschacht besteht, die zwischen einer Ejectstellung und einer Spielstellung verstellbar sind, in der der Kassettenschacht in eine Spiellage absenkbar ist, wobei ein Ladegetriebe vorgesehen ist, mit dem der Lademechanismus zu- und abschaltbar ist und das von Teilen des Wickelgetriebes antreibbar ist.

Ein derartiges Magnetbandkassettengerät ist aus der DE 37 19 890 C2 (PHD 87-101) bekannt. Ein in zwei Richtungen umlauffähiger Motor, der die Wickelteller für die Bandwickel antreibt, dient dabei außerdem dem Verschieben eines Lademechanismus, der aus einem Liftschieber und einem in diesem geführten Kassettenschacht besteht. Die Verschiebebewegung wird dem Liftschieber von dem Motor über eine Servostange übertragen. Aus der EP 366 191 A2 (PHD 89-070 EP) ist es darüber hinaus bekannt, auf der Servostange eine Steuerstange anzuordnen, die mit einer Mitnehmerstange verbunden ist. Servostange, Steuerstange und Mitnehmerstange beeinflussen das Mitnehmen des Liftschiebers auf dem Verschiebeweg der Servostange.

Die Mitnahme des Liftschiebers erfolgt über ein Kupplungsglied, welches von der einen Seite einer Chassisplatte auf die Gegenseite hindurchgreift. Um dieses Hindurchgreifen zu ermöglichen, ist in der Chassisplatte ein Längsschlitz vorgesehen. Dieser Längsschlitz beschränkt den Bewegungsweg des Liftschiebers, da der Längsschlitz nicht beliebig lang gemacht werden kann, ohne die Stabilität der Chassisplatte zu schwächen. Dadurch ist es bei diesem bekannten Gerät schwierig, eine Verlängerung des Auswurfweges der Kassette zu erreichen.

Es ist aus der DE 38 38 013 A1 bekannt, den Lademechanismus von einem Motor anzutreiben, der auch die Wickelwellen für die Wickelspulen des Magnetbandes antreibt. Während der Ladevorgänge ist der Antrieb umgeschaltet vom Wickelantrieb zum Antrieb des Lademechanismus. Die Antriebsumschaltung erfolgt mittels einer von einer Funktionsplatte betätigten schwenkbaren Betätigungsplatte. Das Problem einer Verlängerung des Auswurfweges besteht dabei nicht, weil Videokassetten wesentlich größere Abmessungen als Audio-Kompaktkassetten haben und dadurch ohnehin weit genug ausgeschoben werden.

Es ist Aufgabe der Erfindung, den Verschiebeweg des Liftschiebers zu verlängern, beispielsweise um eine Kassette in Ejectstellung weiter aus dem Gerät herauszuhalten, ohne eine Schwächung der Chassisplatte herbeizuführen und mehr Freiraum auf der Kopfseite des Laufwerkes zu gewinnen.

Die gestellte Aufgabe ist erfindungsgemäß dadurch gelöst, daß die Zu- und Abschaltung mittels einer von der Servostange getragenen Steuerstange erfolgt, wobei das Ladegetriebe und die es antreibenden Teile des Wickelgetriebes auf der Chassisseite, auf der der Lademechanismus angeordnet ist, mit dem Liftschieber antriebsmäßig verbunden sind und wobei das Ladegetriebe an einem schwenkbaren Drehhebel angeordnet ist, der von der Steuerstange zwischen einer Antriebs- und einer Außereingriffsstelle verstellbar ist.

Da der Antrieb des Liftschiebers nicht mehr durch die Chassisplatte hindurchgreift und der Schlitz damit entfällt, sind dem Verschiebeweg des Liftschiebers nur noch Grenzen gesetzt durch die Außenabmessungen der Chassisplatte selbst.

Nach einer weiteren Ausgestaltung der Erfindung ist vorgesehen, daß die Steuerstange beim Verschieben der Servostange in Laderichtung auf einem Teil des Verschiebeweges mitnehmbar ist, bis ein Anschlag das Mitverschieben der Steuerstange derart begrenzt, daß ein Steuernocken des Drehhebels, von einer durch den Anschlag vorgegebenen Stellung der Servostange an, auf eine Kontur der Steuerstange auflaufen muß, die den Drehhebel in die Außer-Eingrifflage zwingt. Damit wird sichergestellt, daß das Ladegetriebe nicht außer Eingriff kommt, bevor der Lademechanismus seine Spiel-Endstellung erreicht hat und außer Eingriff bleibt, bis er wieder in Funktion treten soll zum Kassettenwechsel.

Nach einer weiteren Ausgestaltung der Erfindung ist vorgesehen, daß ein Verriegelungshebel vorgesehen ist, der zur Steuerung des Steuerorgans vom Kassettenschieber derart beaufschlagbar ist, daß er das Schaltorgan bei Einzugsbewegungen mit der Servostange in Eingriff bringt, bis die Servostange das Schaltorgan selbst in der Eingriffstellung hält. Der Verriegelungshebel sorgt dabei während der Bewegungen der Servostange unabhängig von Bewegungen von Lademechanismus, daß die Servostange ihre Funktionen ausüben kann, ohne daß sie sich von ihrem Antrieb abkoppelt.

Die Erfindung wird anhand der Zeichnung näher erläutert. Die zum Verständnis erforderlichen Teile des Magnetbandkassettengerätes sind dabei in verschiedenen Funktionsstellungen dargestellt. Es zeigen:
Fig. 1 den Beetriebsmechanismus eines Magnetbandkassettengerätes zum Bewegen des Lademechanismus für Magnetbandkassetten und zum Verstellen des Kopfträgers des Laufwerkes in dem Gerät, dargestellt in der Auswerfstellung,
Fig. 2 eine Seitenansicht des Lademechanismus des Laufwerkes in dem Geräte von der Seite eines Zahnstangenschiebers her gesehen, der von einem Ladegetriebe beaufschlagt wird,
Fig. 3 den Betriebsmechanismus nach Fig. 1 in einer Stellung, in der das Ladegetriebe und der Kassettenschacht eine Steuerstange zum Verstellen des Kopfträgers des Laufwerkes in Eingriff mit dem Antrieb gebracht haben,
Fig. 4 eine Stellung des Betriebsmechanismus, in dem der Lademechanismus in die Spielstellung überführt ist,
Fig. 5 eine Stellung des Betriebsmechanismus, in dem der Kopfträger von der Steuerstange in seine Spielstellung überführt ist,
Fig. 6 eine Stellung des Betriebsmechanismus, bei dem die Steuerstange nach einer Verriegelung des Kopfträgers in der Spielstellung zurückgefahren ist und sich der Antrieb des Laufwerkes von der Steuerstange entkoppelt hat,
Fig. 7 eine Stellung des Betriebsmechanismus, in der der Kopfträger in eine Stand-by-Lage zurückgeschwenkt ist und die Entscheidung fällt, ob das Laufwerk wieder in den Spielzustand zurückgebracht werden oder in die Ejectstellung überführt werden soll.

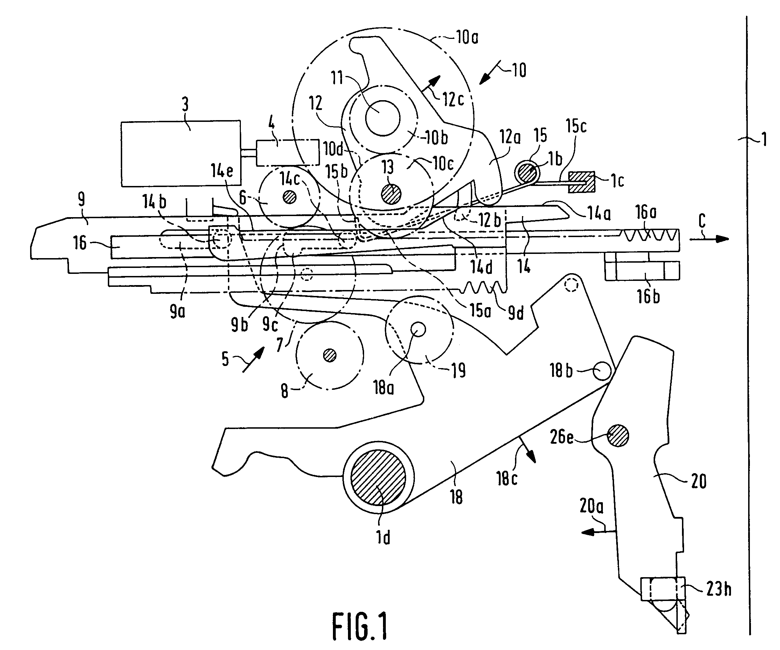

Wie Fig. 1 zeigt, ist das Laufwerk eines Magnetbandkassettengerätes auf einer Chassisplatte 1 aufgebaut. Auf der Chassisplatte ist ein Wickelmotor 3 angeordnet, der über ein Schneckenzahnrad 4 ein Wickelgetriebe 5 mit einem Untersetzungszahnrad 6, einem Zentralzahnrad 7 und einem Übertragungszahnrad 8 antreibt. Das Wickelgetriebe 5 läuft, solange der Wickelmotor 3 umläuft.

Am Chassis 1 ist auf nicht dargestellte Weise eine Servostange 9 längsverschieblich angeordnet.

Es ist ein Ladegetriebe 10 vorgesehen, das aus drei Zahnrädern, einem Transportrad 10a, einem Zwischenrad 10b und einem Liftrad 10c besteht. Das Transportrad 10a und das Zwischenrad 10b sind miteinander starr gekoppelt und auf einer Welle 11 eines Drehhebels 12 gelagert. Der Drehhebel 12 selbst ist schwenkbar um eine Schwenkwelle 13, um die auch das Liftrad 10c umlaufen kann. Der Drehhebel 12 ist in Richtung eines Pfeiles 12 federbelastet. Der Drehhebel 12 ist mit einem Steuernocken 12a versehen, der eine Steuerkontur 14a einer Steuerstange 14 abfahren kann. Um ein seitliches Verkippen und damit einen Kontaktverlust zwischen Steuernocken 12a und Steuerstange 14 zu vermeiden, ist am Drehhebel noch eine Hilfsfahne 12b vorgesehen, die seitlich gegen die Steuerstange 14 drückt. Die Steuerstange 14 ist auf der Servostange 9 verschieblich gelagert. Die Servostange 9 hat dazu zwei Führungsnuten 9a, 9b, in denen Führungsstifte 14b und 14c gleiten können. Die Führungsnut 9b hat einen L-förmigen Arm 9c, in den der Führungsstift 14c einlaufen kann, wie später noch beschrieben wird. Mit dem Führungsstift 14c wirkt eine Anschlagfeder 15 zusammen, die an einem freien Ende 15a einen Federhaken 15b aufweist. Die Anschlagfeder 15 ist auf einem Stift 1b des Chassis 1 gelagert und stützt sich mit einem Federarm 15c an einem Widerlager 1c ab.

Die Steuerstange 14 hat auf ihrer Steuerkontur 14a eine Schrägfläche 14d als Übergang zu einer tiefer gelegenen Steuerkontur 14e. Solange der Steuernocken 12a auf der Konturfläche 14a entlang läuft, sind das Untersetzungszahnrad 6 und das Transportrad 10a in Eingriff.

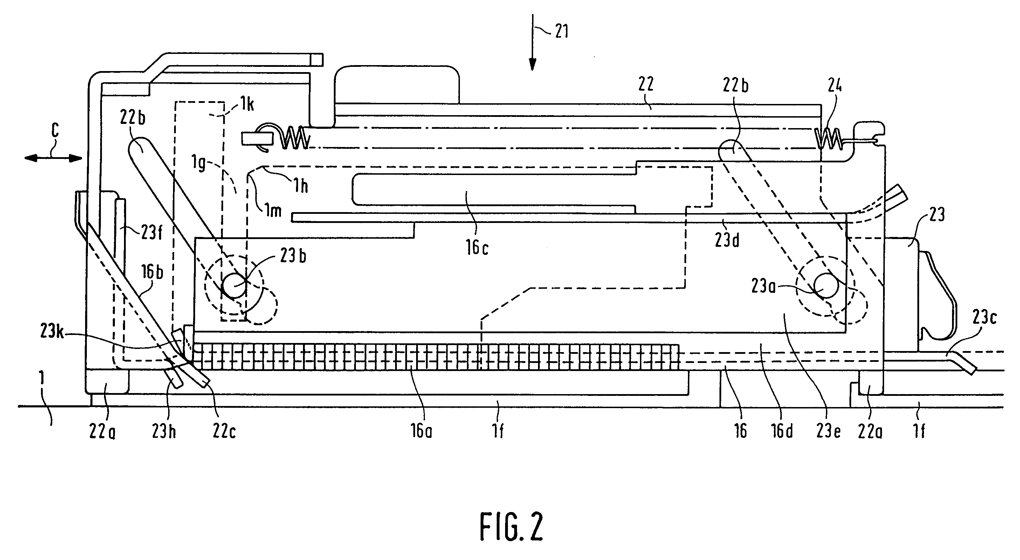

Das Liftrad 10c wirkt mit einem Zahnstangenschieber 16 zusammen, der in Längsrichtung der Servostange 9 verschieblich ist und dessen Zahnung 16a mit der Zahnung 10d des Liftrades 10c kämmt. Der Zahnstangenschieber 16 hat eine Schrägfläche 16b, die aus Fig. 2 deutlicher zu erkennen ist und die mit einer geneigt verlaufenden Mitnehmer 23h des Kassettenschachtes 23a zusammenwirkt. Die Neigung der Schrägfläche 16b entspricht der Neigung von Liftschlitzen 22b und einer Leitschiene 22c eines Liftschiebers 22.

Es ist ein Schaltorgan 18 vorgesehen, das um eine chassifeste Achse 1d schwenkbar ist. Das Schaltorgan 18 trägt mittels einer Welle 18a ein Schaltrad 19, welches mit einer Zahnstange 9d der Servostange 9 zusammenwirkt. Das Schaltorgan 18 ist mittels einer nicht dargestellten Feder in Richtung eines Pfeiles 18c federbelastet.

Mit dem Stellstift 18b wirkt ein Verriegelungshebel 20 zusammen. Der Verriegelungshebel 20 ist von einem Mitnehmer 23h des Kassettenschachtes um einen kopfträgerfesten Stift 26 drehbar entsprechend der Stellung des Liftschiebers 22.

Fig. 2 zeigt in Seitenansicht den Lademechanismus 21 des Laufwerkes. Es ist ein Liftschieber 22 vorgesehen, der mit Füßen 22a in Führungsschienen 1f des Chassis 1 verschieblich geführt ist in Richtung der Servostange 9. Der Liftschieber 22 weist Liftschlitze 22b auf, die gegenüber der durch einen Pfeil C angegebenen Verschieberichtung geneigten Verlauf haben. In diese Liftschlitze greifen Bolzen 23a und 23b eines Kassettenschachtes 23. Der Bolzen 23b greift außerdem in eine Senknut 1g ein, die zwischen einer Führungswand 1h und einer Begrenzungswand 1k gebildet ist.

Der Kassettenschacht 23 weist auf Abstand eine untere Leitplatte 23c und eine obere Leitplatte 23d auf, die über eine in der Zeichnung hinten gelegene vertikale Verbindungswand 23e, die die Bolzen 23a und 23b trägt, verbunden sind. Der Kassettenschacht 23 hat noch eine rückwärtige Anschlagwand 23f, gegen die eine Kassette beim Einschieben von Hand schiebbar ist.

Der Kassettenschacht 23 hat zwei Mitnehmer, und zwar einen Mitnehmer 23h, der auch in Fig. 1 dargestellt ist, und einen Mitnehmer 23k, die zwischen sich die Leitschiene 22c des Liftschiebers 22 führen. Der Liftsteg 22c hat eine Neigung gegenüber der Einschubrichtung, die der Neigung der Liftschlitze 22b entspricht.

An dem Liftschieber 22 ist der Zahnstangenschieber 16 in Richtung des Pfeiles C verschieblich angeordnet. Der Zahnstangenschieber, der, wie die Zeichnung zeigt, nach Art eines U mit zwei Schenkeln 16c und 16d ausgebildet ist, die in Richtung der Verschieberichtung C verlaufen, trägt am unteren Schenkel 16d die Zahnstange 16a, die mit dem Liftrad 10c zusammenwirkt. Der Zahnstangenschieber 16 weist außerdem die in Fig. 1 dargestellte Schräge 16b auf, die mit dem Mitnehmer 23h des Kassettenschachtes 23 zusammenwirkt.

Der Zahnstangenschieber 16 ist mittels einer Feder 24 gegenüber dem Liftschieber 22 verspannt.

Bei der Darstellung nach Fig. 1 befindet sich der Betriebsmechanismus in der Ejectstellung. Dabei drückt der Steuernocken 12a gegen die Steuerkontur 14a, und das Untersetzungsrad 6 ist mit dem Transportrad 10a im Eingriff. Der Verriegelungshebel 20 hat zwar Kontakt mit dem Stellstift 18b, belastet diesen aber nur durch eine leichte Kraft einer nicht dargestellten Feder, da er nicht von dem Mitnehmer 22h verstellt ist. Das Schaltorgan 18 ist von dem Übertragungszahnrad 8 abgerückt, und es besteht mithin kein Kontakt zwischen der Zahnstange 9d und dem Antrieb. Wohl aber ist die Zahnstange 16a des Zahnstangenschiebers 16 mit dem Liftrad 10c im Eingriff und damit verstellbar, sobald der Motor 3 läuft.

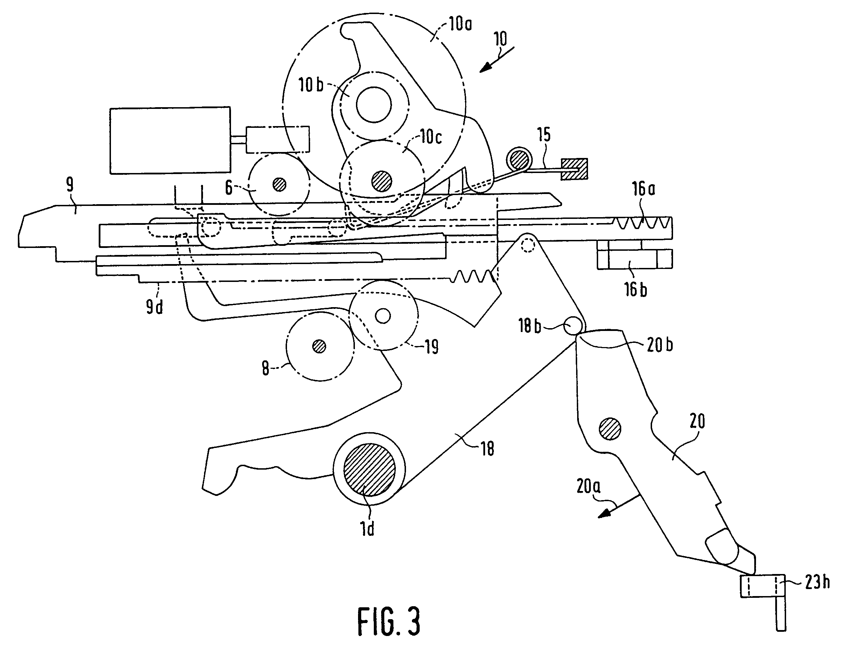

Wird der Wickelmotor 3 eingeschaltet, dann schiebt das Liftrad 10c die Zahnstange 16a des Zahnstangenschiebers 16 in Richtung des Pfeiles 23 nach rechts. Die Feder 24 des Zahnstangenschiebers 16 ist so stark ausgelegt, daß sie den Liftschieber 22 und dieser wiederum den Kassettenschacht 23 mitnimmt. Damit fahren der Zahnstangenschieber 16 und der Mitnehmer 23h in der Zeichnung nach rechts. Nun drückt der Mitnehmer 23h, wie Fig. 3 zeigt, den Verriegelungshebel 20 gegen eine durch einen Pfeil 20a angedeutete Vorspannung beiseite, und der Verriegelungshebel 20 schwenkt entgegen dem Uhrzeigersinn. Der Verriegelungshebel 20 stößt mit einer Kante 20b gegen das Schaltorgan 18 und verschwenkt dieses ebenfalls gegen die vorspannende Federkraft 18c entgegen dem Uhrzeigersinn. Damit kommen das Schaltrad 19 und das Übertragaungszahnrad 8 in Eingriff, und das Übertragungszahnrad 8 verschiebt über das Schaltrad 19 die Zahnstange 9d. Das Ladegetriebe 10 ist weiter im Eingriff.

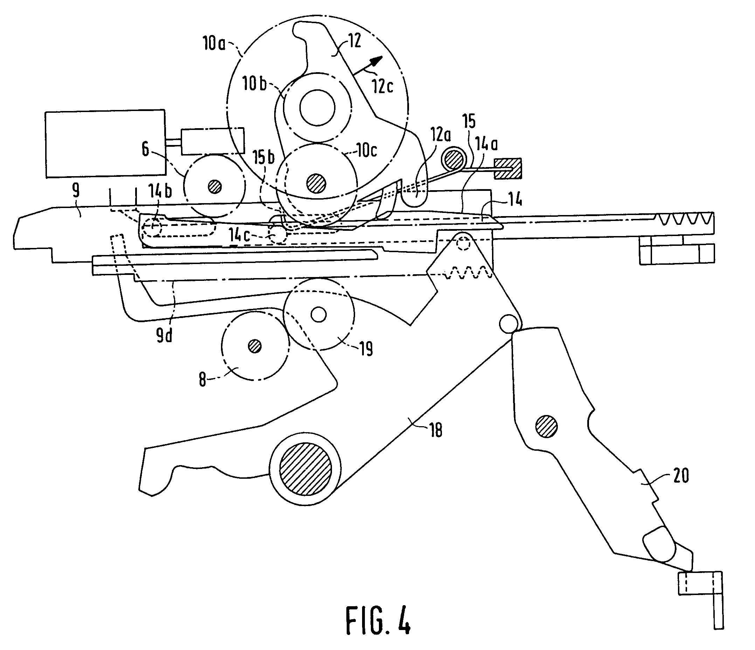

Im Verlauf der weiteren Verschiebung der Servostange 9 nach rechts rutschen, da der Führungsstift 14 von einem Federhaken 15b der Feder 15 festgehalten wird, die Führungsstifte 14b und 14c in den Führungsnuten 9a und 9b nach links, bis der Führungsstift 14c schließlich in den L-förmigen Arm 9c einfällt. Damit kippt die Steuerstange 14 im Uhrzeigersinn ab, und der Steuernocken 12a wird von der Steuerkurve 14a freigegeben. Dies ist deutlich aus Fig. 4 zu erkennen. Der Drehhebel 12 kann nun, da er in Richtung eines Pfeiles 12c unter Federvorspannung steht, das Transportrad 10a von dem Untersetzungsrad 6 abrücken. Die Drehung des Drehhebels 12 wird begrenzt durch eine Kante 16f des Zahnstangenschiebers 16, gegen den eine Hilfsfahne 12b stößt. Damit bleibt das Ladegetriebe 10 stehen. Das Schaltorgan 18 ist von dem Verriegelungshebel 20 weiterhin im Uhrzeigersinn belastet, und das Übertragungszahnrad 8 kann weiterhin über das Schaltrad 19 die Zahnstange 9d bewegen. Auf den Zahnstangenschieber 16 und damit auf den Liftschieber 22 wirkt in Einschieberichtung eine Ejectfeder ein, deren Wirkung in Fig. 2 durch einen Pfeil 30 angedeutet ist. Die Ejectfeder bewirkt, daß nach dem Entkoppeln des Ladegetriebes 10 Zahnstangenschieber 16 und Liftschieber 22 und damit auch der Kassettenschacht 23 in der Play-Position gehalten werden.

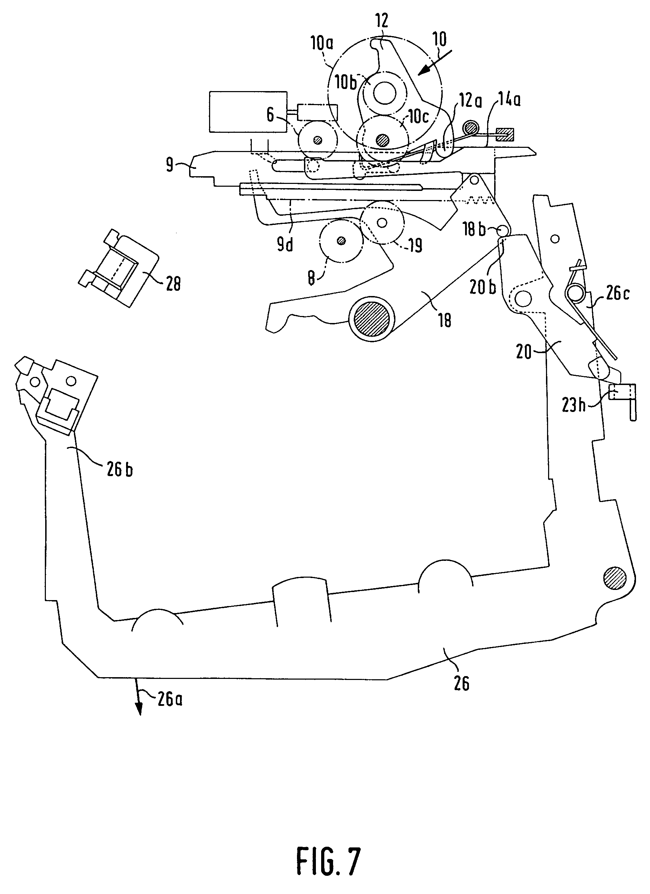

Bevor das Ladegetriebe 10 ausgerückt ist, ist der Kassettenschacht aus einer oberen Stellung, die in Fig. 2 nicht dargestellt ist, in die untere Stellung nach Fig. 7 abgesenkt worden. Verantwortlich dafür ist die Leitschiene 22c, die die Mitnehmer 23h und 23k nach unten geschoben hat, sowie die Liftschlitze 22b und die Führungsstifte 23a und 23b im Zusammenwirken mit dem Widerlager 1c. Mit dem Erreichen der Stellung nach Fig. 4 befindet sich der Kassettenschacht in einer abgesenkten Spielstellung, und der Ladevorgang ist abgeschlossen. Das Ladegetriebe wird zu diesem Zeitpunkt, wie beschrieben, abgeschaltet.

Der Anschlag 15b der Anschlagfeder 15 hat dafür gesorgt, daß die Führungsstifte 14b und 14c auf der Servostange 9 nach links rutschen mußten, und zwar so lange, bis die Anschlagfeder 15 den Führungsstift 14c in den L-förmigen Arm 9c der Führungsnut 9b gedrückt hat.

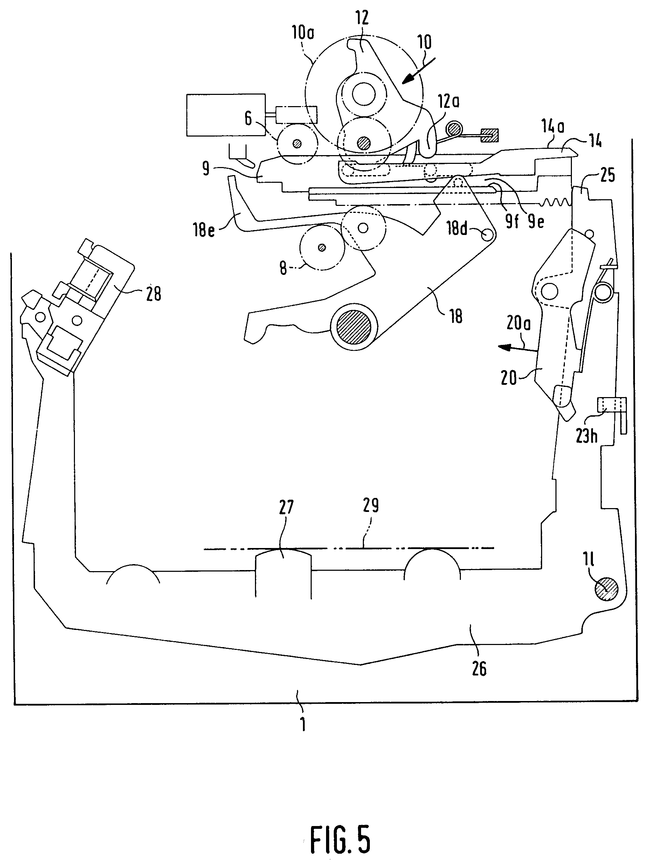

Entsprechend der Funktionsweise des Magnetbandkassettengerätes ist das Laufwerk mit dem Absenken des Kassettenschachtes 23 in die Spielstellung noch nicht im Spielbetrieb. Hierzu muß die Servostange noch weiter in der Zeichnung nach rechts verschoben werden. Genauere Einzelheiten dieser Verschiebung und der dabei ablaufenden Mechanismen sind in der DE 37 19 890 C1 beschrieben (Fig. 5). Die Servostange 9 fährt also weiter nach rechts und drückt gegen einen Anschlag 25 eines Kopfträgers 26, der um ein Drehlager 11 des Chassis 1 verschwenkbar ist. Durch das Anschlagen der Servostange 9 gegen den Anschlag 25 wurde der Kopfträger in seine Spielstellung gedrückt, in der der Magnetkopf 27 mit dem angedeuteten Magnetband in Kontakt kommt. Entsprechend der Betriebsweise nach der DE 37 19 890 C1 wird in dem Augenblick, in dem der Kopfträger in die Stellung nach Fig. 1 geschwenkt ist, ein Haltemagnet 28 aktiviert, der den Kopfträger 26 in dieser Spielstellung festhält.

Die Servostange 9 hat nun ihre Funktion erfüllt und fährt, nachdem der Motor 3 seine Drehrichtung umgekehrt hat, angetrieben von dem Übertragungszahnrad 8, erneut nach links. Das Ladegetriebe 10 bleibt weiterhin außer Eingriff, da der Steuernocken 12a keinen Kontakt mit der Steuerkontur 14a bzw. 14e hat.

Obwohl die Servostange 9 nun nach links fährt und den Anschlag 25 des Kopfträgers 26 freigibt, bleibt der Kopfträger aufgrund der Haltekraft des Haltemagneten 28 in der Spielstellung stehen. Die Stellkante 20b hatte auch den Stellstift 18b des Schaltorgans 18 verlassen, da der Kopfträger 26 in die Spielstellung geschwenkt ist.

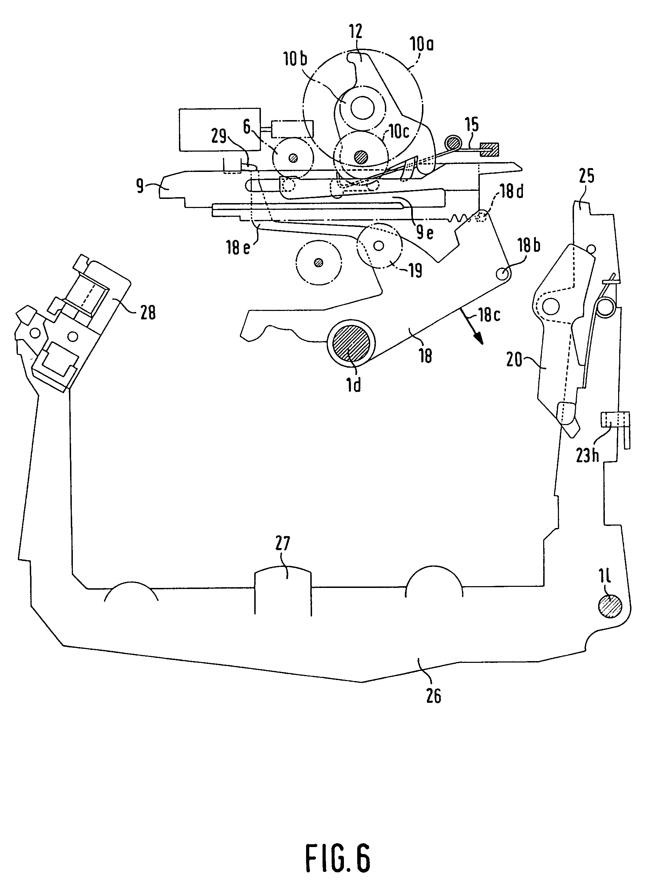

Das Schaltorgan konnte aber nicht im Uhrzeigersinn zurückschwenken, da ein Stift 18d in eine Nut 9e der Servostange 9 eingelaufen ist und durch eine Rückkaltekante 9f festgehalten wird. Beim Zurücklaufen der Servostange 9 nach links hat die Nut 9e den Stift 18d wieder freigegeben, so daß nun nach dem Zurückfahren entsprechend Fig. 6 das Schaltorgan in Richtung der Federbelastung 18c im Uhrzeigersinn verschwenken konnte, wobei das Übertragungszahnrad 8 von dem Schaltrad 19 wegrückte. Damit ist jetzt auch der Antrieb der Servostange unterbrochen. Ein Schaltarm 18e hat einen Schaltnocken 29 eines Zentralschalters angeschlagen und schaltet das Laufwerk nun in den Spielbetrieb.

Fig. 7 zeigt die Stellung in der sich das Laufwerk in der Stand-by-Stellung befindet. In dieser Stellung ist das Haltemagnet 28 abgeschaltet, und der Kopfträger 26 ist aufgrund der Wirkung einer durch einen Pfeil 26a angedeuteten Angriffsrichtung einer nicht dargestellten Feder entgegen dem Uhrzeigersinn verschwenkt. Der Haltemagnete 28 und ein Arm 26b des Kopfträgers 26 haben sich getrennt. Der Verriegellungshebel 20 wandert aufgrund der Kopfträgerverschwenkung mit seiner Kante 20b gegen den Stellstift 18b. Das Schaltorgan 18 wird dadurch entgegen dem Uhrzeigersinn so weit verschwenkt, daß das Übertragungszahnrad 8 über das Schaltrad 19 nun wieder mit der Verzahnung 9d der Servostange 9 gekuppelt ist. Soll das Laufwerk in die Ejectstellung überführt werden, dann fährt die Servostange 9 nach links, wobei der Steuernocken 12a auf die Steuerkurve 14a aufläuft. Der Drehhebel 12 wird nun entgegen dem Uhrzeigersinn verschwenkt, und das Untersetzungszahnrad 6 kommt mit dem Transportrad 10a in Eingriff. Das Ladegetriebe 10 ist selbsteinziehend ausgelegt und zieht sich selbst schnell in den vollständigen Eingriff, sobald die Zähne anfangen sich zu erfassen. Dies hat zur Folge, daß der Wickelmotor 3 den Lademechanismus 21 nach Fig. 2 in die Ejectstellung überführt. In der Ejectstellung (Fig. 1) hat der Mitnehmer 23h den Verriegelungshebel 20 wieder verlassen, so daß das Steuerorgan 18 freigeworden ist und im Uhrzeigersinn verschwenkte, wobei das Übertragungszahnrad 8 und das Schaltrad 19 außer Eingriff gekommen sind.

Beim Überführen in die Ejectstellung sind die Führungsstifte 23a und 23b in den Schlitzen 22b hochgelaufen, wobei der Stift 23b gleichzeitig in der Senknut 1g hochgewandert ist. Solange wie der Liftschieber 22 sich in Richtung auf die Ejectstellung nach links bewegt und sich der Kassettenschacht 23 nur anhebt, drückt der Zahnstangenschieber mit seiner Kante 16b gegen die Mitnehmer 23h des Kassettenschachtes 23. Solange der Führungsstift 23b in der Senknut 1g hochläuft, bewegt sich der Liftschieber 22 mit dem Zahnstangenschieber 16 synchron nach links, weil der Zahnstangenschieber 16 von dem Mitnehmer 23h festgehalten wird. Die Feder 24 spannt sich auch bei höherer Kraft zwischen Liftschieber 22 und Zahnstangenschieber 16 nicht, da die Bewegungen von Liftschieber 22 und Zahnstangenschieber 16 für diese Zeit miteinander formschlüssig gekoppelt sind. Wenn der Führungsbolzen 23b die eine Ecke 1m umläuft, fährt der Schacht 23 dem Liftschieber 22 in die Ejectstellung.

## Patentansprüche

1. Magnetbandkassettengerät mit einem die Wickelteller über ein Wickelgetriebe (5) antreibenden Motor, der auch eine längsverschiebliche, einen Kopfträger (26) verstellende Servostange (9), ein Schaltorgan (18) und einen Lademechanismus (21) antreibt, der aus einem Liftschieber (22) und einem mit diesem gekuppelten Kassettenschacht (23) besteht, die zwischen einer Ejectstellung und einer Spielstellung verstellbar sind, in der der Kassettenschacht (23) in eine Spiellage absenkbar ist, wobei ein Ladegetriebe (10) vorgesehen ist, mit dem der Lademechanismus (21) zu- und abschaltbar ist und das von Teilen (6) des Wickelgetriebes (5) antreibbar ist, dadurch gekennzeichnet, daß die Zu- und Abschaltung mittels einer von der Servostange (9) getragenen Steuerstange (14) erfolgt, wobei das Ladegetriebe (10) und die es antreibenden Teile (6) des Wickelgetriebes (5) auf der Chassisseite, auf der der Lademechanismus angeordnet ist, mit dem Liftschieber (22) antriebsmäßig verbunden sind und wobei das Ladegetriebe (10) an einem schwenkbaren Drehhebel (12) angeordnet ist, der von der Steuerstange (14) zwischen einer Antriebs- und einer Außereingriffsstelle verstellbar ist.

2. Magnetbandkassettengerät nach Anspruch 1, dadurch gekennzeichnet, daß die Steuerstange (14) beim Verschieben der Servostange (9) in Laderichtung (C) auf einem Teil des Verschiebeweges mitnehmbar ist, bis ein Anschlag (15b) das Mitverschieben der Steuerstange (14) derart begrenzt, daß ein Steuernocken (12a) des Drehhebels (12) von einer durch den Anschlag (15b) vorgesehenen Stellung der Servostange (9) an auf eine Kontur (14e) der Steuerstange (14) auflaufen muß, die den Drehhebel (12) in die Außer-Eingrifflage zwingt.

3. Magnetbandkassettengerät nach Anspruch 1, dadurch gekennzeichnet, daß ein Verriegelungshebel (20) vorgesehen ist, der zur Steuerung des Steuerorgans (18) vom Kassettenschieber (23) derart beaufschlagbar ist, daß er das Schaltorgan (18) bei Einzugsbewegungen mit der Servostange (9) in Eingriff bringt, bis die Servostange (9) das Schaltorgan (18) selbst in der Eingriffstellung hält.
